# EUROPÄISCHE PATENTANMELDUNG

(11) **EP 1 867 606 A1**
(43) Veröffentlichungstag der Anmeldung: **19.12.2007**
(21) Anmeldenummer: 06405257.4
(22) Anmeldetag: 14.06.2006
(51) Int. Cl.: C02F 1/00

(54) **Wasserfilterkartusche für einen Wassertank**

(71) Anmelder: Elfo AG, 6072 Sachseln (CH)
(72) Erfinder: Staiger, Petra, 6064 Kerns (CH); Kathriner, Peter, 6060 Sarnen (CH)
(74) Vertreter: Nückel, Thomas

(57) **Zusammenfassung**

Die erfindungsgemäße Wasserfilterkartusche für eine Getränkemaschine mit einem Wassertank umfasst ein Gehäuse (2, 3), das eine Adapteraufnahme (3.1) aufweist, und einen Adapter (5) für einen Anschlussstutzen (22'; 22") des Wassertanks (20'; 20''), wobei der Adapter (5) in die Adapteraufnahme (3.1) des Gehäuses (2, 3) einbaubar ist.

## Beschreibung

### Technisches Gebiet

Die Erfindung betrifft eine Wasserfilterkartusche für einen Wassertank sowie eine Getränkemaschine mit Wassertank und Wasserfilterkartusche.

Wasserfilterkartuschen werden in Wassertanks von Getränkemaschinen eingebaut, um das im Wassertank befindliche Wasser aufzubereiten. Mit Hilfe der Wasserfilterkartusche kann die durch die Filterkartusche geleitete Flüssigkeit, wie beispielsweise Trinkwasser, demineralisiert und entkarboniert werden. Zudem können feine Partikel herausgefiltert werden. Im Wassertank befindet sich ein Anschluss, auf den die Filterkartusche gesteckt und über den das aufbereitete Wasser aus dem Wassertank entnommen werden kann. Um das Wasser durch die Filterkartusche zu saugen, verfügt die Getränkemaschine vorzugsweise über eine Saugpumpe.

### Stand der Technik

Aus dem Stand der Technik WO 2006/040121 A1 und EP 1 340 442 B1 ist jeweils eine Filterkartusche bekannt, bei der der Einlaufbereich für das zu filternde Wasser und die Auslauföffnung für das gefilterte Wasser im Bodenbereich der Filterkartusche angeordnet sind. An den Einlaufbereich schließt sich eine Aufströmkammer und an diese wiederum eine Abströmkammer an, wobei die beiden Kammern im oberen Bereich der Filterkartusche miteinander in Verbindung stehen.

Je nach Hersteller der Getränkemaschine kann der im Wassertank befindliche Anschluss, mit dem die Filterkartusche verbunden werden soll und über den das aufbereitete Wasser aus dem Wassertank entnommen werden kann, unterschiedlich ausgebildet sein. Bisher sind diese Anschlüsse nicht genormt. Dies hat zur Folge, dass eine Filterkartusche nicht auf jeden Anschluss aufgesetzt werden kann. Statt dessen ist es erforderlich für jeden Anschlusstyp eine separate Filterkartusche zu konstruieren. Dadurch erhöht sich der logistische Aufwand bei der Bevorratung und Bereitstellung von Filterkartuschen.

### Darstellung der Erfindung

Eine Aufgabe der Erfindung ist es, eine Wasserfilterkartusche für einen Wassertank anzugeben, die so ausgebildet ist, dass sie für verschiedene Wassertanks mit unterschiedlich ausgebildeten Anschlussstutzen einsetzbar ist.

Die Aufgabe wird durch eine Wasserfilterkartusche für einen Wassertank mit den Merkmalen gemäß Patentanspruch 1 gelöst.

Die erfindungsgemäße Wasserfilterkartusche für eine Getränkemaschine mit einem Wassertank umfasst ein Gehäuse, das eine Adapteraufnahme aufweist, und einen Adapter für einen Anschlussstutzen des Wassertanks, wobei der Adapter in die Adapteraufnahme des Gehäuses einbaubar ist.

Vorteilhafte Weiterbildungen der Erfindung ergeben sich aus den in den abhängigen Patentansprüchen angegebenen Merkmalen.

Bei einer Weiterbildung der erfindungsgemäßen Wasserfilterkartusche weist der Adapter zwei unterschiedlich ausgebildete Anschlussstutzen auf. Dadurch kann die Filterkartusche über einen einzigen Adapter mit zwei verschiedenen Wassertank-Anschlüssen verbunden werden.

Bei einer anderen Weiterbildung der erfindungsgemäßen Wasserfilterkartusche ist der Adapter in zwei verschiedenen Einbaulagen in die Adapteraufnahme des Gehäuses einbaubar. Über den Adapter in seiner ersten Einbaulage ist das Gehäuse mit einem eine erste Bauform aufweisenden Anschluss des Wassertanks verbindbar. Über den Adapter in seiner zweiten Einbaulage ist das Gehäuse mit einem eine zweite Bauform aufweisenden Anschluss des Wassertanks verbindbar.

Bei einer Ausführungsform der erfindungemäßen Wasserfilterkartusche ist die Adapteraufnahme im Inneren des Gehäuses angeordnet. Damit kann der Adapter in der die Kartusche versenkt und damit der zur Verfügung stehende Bauraum optimal ausgenutzt werden.

Bei einer weiteren Ausführungsform der erfindungemäßen Wasserfilterkartusche ist der Adapter herausnehmbar. Dadurch kann die Kartusche jederzeit mit einem anderen Adapter ausgestattet werden.

Vorteilhafter Weise weist der erste Anschlussstutzen des Adapters in Längsrichtung mehrere Rippen auf. Dadurch wird ein sicherer und stabiler Halt des Adapters im Anschluss des Wassertanks gewährleistet.

Zudem ist es von Vorteil, wenn bei der Wasserfilterkartusche der erste Anschlussstutzen des Adapters eine ringförmige Rippe aufweist. Dadurch wird gewährleistet, dass der Adapter in der Adapteraufnahme der Filterkartusche sicher gehalten wird.

Darüber hinaus kann bei der Wasserfilterkartusche der erste Anschlussstutzen des Adapters im Mündungsbereich eine Dichtung aufweisen. Damit wird erreicht, dass das bereits aufbereitete Wasser nicht mehr zurück in den Wassertank strömen kann.

Zur Lösung der Aufgabe wird ferner vorgeschlagen, dass bei der Wasserfilterkartusche der zweite Anschlussstutzen des Adapters auf der Außenseite einen elastischen Ring aufweist. Dadurch wird gewährleistet, dass der Adapter in der Adapteraufnahme sicher gehalten wird, wenn der erste Anschlussstutzen zur Verbindung der Filterkartusche mit dem Wassertank benutzt wird.

Bei der Wasserfilterkartusche kann nach einem weiteren Merkmal der Erfindung der zweite Anschlussstutzen des Adapters auf der Außenseite einen Dichtring aufweisen. Damit wird verhindert, dass das aufbereitete Wasser in den Wassertank zurück strömen kann.

Bei der Wasserfilterkartusche kann der Adapter ein Gewinde aufweisen, über das der Adapter mit dem Anschluss des Wassertanks verschraubbar ist. Auf diese Weise kann wenigstens eine Dichtung eingespart werden.

Bei der erfindungsgemäßen Wasserfilterkartusche kann die Verbindung zwischen dem Adapter und dem Gehäuse derart ausgestaltet sein, dass nachdem der Adapter mit dem Gehäuse verbunden worden ist, die Verbindung nicht mehr trennbar ist.

Bei einer Weiterbildung der Wasserfilterkartusche ist im Bodenbereich des Gehäuses ein Sieb vorgesehen. Dadurch kann die Kartusche bis zum Kartuschenboden mit Filtermaterial befüllt und das aufzubereitende Wasser auch noch in der Nähe des Bodens des Wassertanks abgesaugt werden.

Nach einem weiteren Merkmal der Erfindung weist die Wasserfilterkartusche einen Abschnitt auf, in dem das Wasser aufsteigt und eine Fallleitung, die sich an diesen Abschnitt anschließt. Auf diese Weise kann die Kartusche kompakt gebaut werden und nutzt den zur Verfügung stehenden Platz im Wassertank optimal aus. Zudem ist eine so ausgebildete Kartusche besonders für einen hohen Wassertank geeignet.

Bei einer Ausführungsform der Wasserfilterkartusche ist im Abschnitt, in dem das Wasser aufsteigt, Filtermaterial vorgesehen.

Bei einer weiteren Ausführungsform der Wasserfilterkartusche ist zwischen dem Abschnitt und der Fallleitung ein Sieb angeordnet. Dadurch wird verhindert, dass Filtermaterial in das Fallrohr gelangt.

Vorteilhafter Weise sind im Gehäuse der Wasserfilterkartusche radial verlaufende Stege vorgesehen, die die Fallleitung umgeben. Die Stege stabilisieren die Fallleitung und können zudem dazu genützt werden das Sieb auf der Fallleitung festzuhalten. Des weiteren wird durch die Stege erreicht, dass das Filtermaterial in der Kartusche gleichmäßig verteilt bleibt.

Darüber hinaus kann das Gehäuse der Wasserfilterkartusche einen unteren Gehäuseteil und einen oberen Gehäuseteil aufweisen, wobei die Adapteraufnahme Teil des unteren Gehäuseteils ist. Dies ist insbesondere für die Herstellung der Kartusche im Spritzgussverfahren von Vorteil.

Zudem kann eine Getränkemaschine mit einer Saugpumpe und der oben beschriebenen Wasserfilterkartusche vorgesehen sein.

Schließlich kann die Wasserfilterkartusche in einer Getränkemaschine verwendet werden.

### Kurze Beschreibung der Zeichnungen

Im Folgenden wird die Erfindung mit mehreren Ausführungsbeispielen anhand von 12 Figuren weiter erläutert.
- Figur 1: zeigt eine dreidimensionale Ansicht der erfindungsgemäßen Wasserfilterkartusche, die für einen Wassertank mit einem ersten Anschlusstyp vorbereitet ist.
- Figur 2: zeigt einen Schnitt durch die erfindungsgemäße Wasserfilterkartusche und einen Teil des Wassertanks mit dem ersten Anschlusstyp.
- Figur 3: zeigt eine dreidimensionale Ansicht der erfindungsgemäßen Wasserfilterkartusche, die für einen Wassertank mit einem zweiten Anschlusstyp vorbereitet ist.
- Figur 4: zeigt einen Schnitt durch die erfindungsgemäße Wasserfilterkartusche und einen Teil des Wassertanks mit dem zweiten Anschlusstyp.
- Figur 5: zeigt eine dreidimensionale Ansicht der erfindungsgemäßen Wasserfilterkartusche ohne den Adapter für den Anschluss an den Wassertank.
- Figur 6: zeigt einen Schnitt durch die erfindungsgemäße Wasserfilterkartusche ohne den Adapter für den Anschluss an den Wassertank.
- Figur 7: zeigt eine weitere dreidimensionale Ansicht der erfindungsgemäßen Wasserfilterkartusche.
- Figur 8: zeigt eine dreidimensionale Ansicht der erfindungsgemäßen Wasserfilterkartusche ohne den Deckel.
- Figur 9: zeigt eine dreidimensionale Ansicht des Adapters der erfindungsgemäßen Wasserfilterkartusche.
- Figur 10: zeigt den Adapter im Querschnitt.
- Figur 11: zeigt eine weitere Ausführungsform des Adapters in der Seitenansicht.
- Figur 12: zeigt die weitere Ausführungsform des Adapters im Querschnitt.

### Wege zur Ausführung der Erfindung

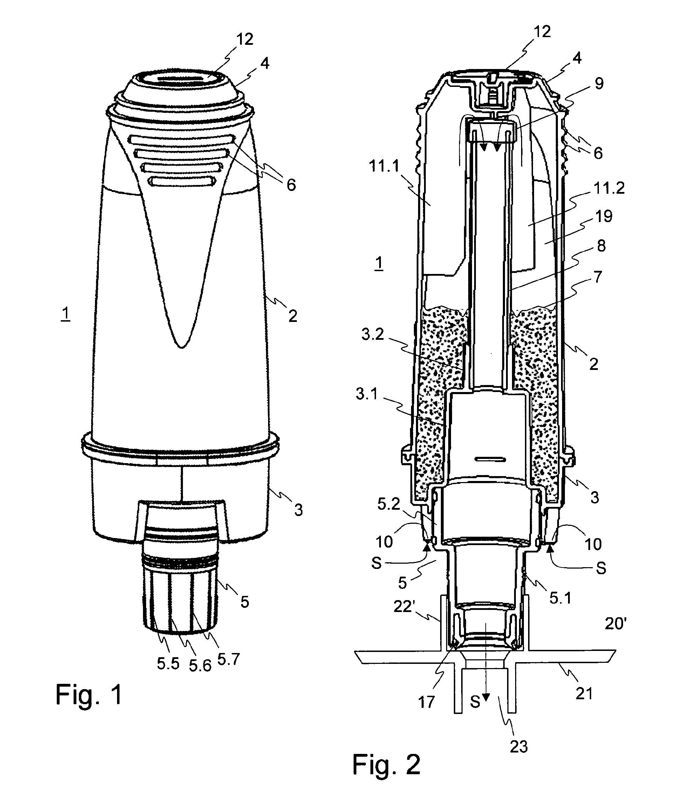

In Figur 1 ist eine dreidimensionale Ansicht der erfindungsgemäßen Wasserfilterkartusche 1 gezeigt, die für einen Wassertank 20' mit einem ersten Anschlusstyp vorbereitet ist. Die Wasserfilterkartusche 1, die im Folgenden auch als Filterkartusche bezeichnet wird, umfasst ein oberes Gehäuseteil 2 und ein unteres Gehäuseteil 3, die beispielsweise durch Kleben, Schweißen oder mittels einer Schnappverbindung miteinander verbunden sind. Die Verbindungsstelle ist abgedichtet, so dass das Filtermaterial 7, das sich im Inneren der Filterkartusche 1 befindet nicht entweichen kann. Die beiden Gehäuseteile 2 und 3 sind aus Kunststoff jeweils als einstückiges Spritzgussteil hergestellt. Der Deckel 4 ist Bestandteil des oberen Gehäuseteils 2. Im oberen Bereich des oberen Gehäuseteils 2 sind mehrere im Wesentlichen horizontal verlaufende Rippen 6 angeordnet, um die Filterkartusche 1 sicher halten zu können. Aus dem unteren Gehäuseteil 3 ragt ein Adapter 5, über dessen unteres Anschlussstück 5.1 die Filterkartusche 1 mit dem Anschluss 22' eines Wassertanks 20' verbindbar ist.

Figur 2 zeigt einen Schnitt durch die erfindungsgemäße Wasserfilterkartusche 1, wobei sich der Adapter 5 in der gleichen Einbaulage befindet wie in Figur 1. Die Filterkartusche 1 ist, wie bereits erwähnt, für einen Wassertank 20' mit einem ersten Anschlusstyp vorbereitet. Der Anschluss 22' befindet sich am Boden 21 des Wassertanks 20' und ist in Figur 2 schematisch dargestellt. Der erste Anschlussstutzen 5.1 des Adapters 5 ragt in den Anschluss 22' und bildet mit ihm eine formschlüssige und kraftschlüssige Verbindung. Der Anschlussstutzen 5.1 weist dazu auf seiner Außenseite mehrere in Längsrichtung und parallel zueinander verlaufende Rippen auf, wobei in Figur 1 lediglich die Rippen 5.5, 5.6 und 5.7 gekennzeichnet sind. Vorzugsweise sind die Rippen auf der Mantelfläche des Anschlussstutzens 5.1 äquidistant verteilt. Der Durchmesser des ersten Anschlussstutzens 5.1 und die Rippen sind so dimensioniert, dass sie beim Befestigen der Filterkartusche 1 am Anschluss 22' einen leichten mechanischen Widerstand bilden und so für einen sicheren und stabilen Halt des Adapters 5 im Anschluss 22' sorgen. Um zu verhindern, dass bereits gefiltertes Wasser wieder zurück in den Wassertank 20' strömt, befindet sich am Ende des ersten Anschlussstutzens 5.1 eine elastische, ringförmige Dichtung 17. Die Dichtung 17 ragt nach hinten in eine Nut, die durch eine innere Wand 5.8 und die Wand des ersten Anschlussstutzens 5.1 gebildet wird. Am stromabwärtigen Ende weist die Dichtung 17 eine ringförmige Lippe auf, die im eingebauten Zustand gegen den Boden 21 des Wassertanks 20' gedrückt wird.

An den Auslass 23 des Wassertanks 20' schließt sich eine in den Figuren nicht gezeigte Leitung mit einer Saugpumpe an, um das Wasser aus der Filterkartusche 1 zu saugen.

Die Strömungsrichtung des Wassers ist mit Pfeilen und dem Bezugszeichen S gekennzeichnet. Die erfindungsgemäße Wasserfilterkartusche 1 ist auch ohne Saugpumpe betreibbar. Befindet sich beispielsweise der Wasserspiegel im Wassertank oberhalb der Einlassöffnung des Fallrohrs 8, sorgt bereits der Staudruck des Wassers dafür, dass das aufzubereitende Wasser durch die Filterkartusche 1 strömt. Es ist auch möglich die Filterkartusche direkt oder indirekt mit einer Druckwasserleitung zu verbinden, so dass das aufzubereitende Wasser durch die Filterkartusche gedrückt wird. Als Druckwasserleitung kann beispielsweise eine Hauswasserleitung dienen.

Im Inneren des Gehäuses 2, 3 befindet sich ein zentrales Fallrohr 8, dessen obere Öffnung von einem Sieb 9 abgedeckt wird und dessen untere Öffnung in eine Aufnahme 3.2 des unteren Gehäuseteils 3 mündet. Im Bereich zwischen der Außenseite des Fallrohrs 8 und der Innenwand des Gehäuses 2, 3 befindet sich granulatförmiges Filtermaterial 7. Dieser Bereich wird im Folgenden auch als Abschnitt oder Steigleitung bezeichnet. Insbesondere wenn das Filtermaterial 7 nass wird, kann es aufquellen. Um zu verhindern, dass das Gehäuse 2, 3 der Filterkartusche 1 sich aufgrund der Volumenzunahme des Filtermaterials 7 verformt, wird dieser Bereich der Filterkartusche 1 vorzugsweise nicht vollständig mit Filtermaterial 7 befüllt. Vielmehr verbleibt nach dem Befüllen der Kartusche 1 ein Leerraum in der Kartusche 1, der als Pufferzone für die Volumenänderung des Filtermaterial 7 dient.

Im Bodenbereich der Filterkartusche 1 befinden sich Siebe 10, um das granulatförmige Filtermaterial 7 zurück zu halten. Die Siebe 10 können als Gitter, Maschen oder Schlitze ausgebildet sein. Als Sieb 10 kann auch ein Flies oder ein Gewebe dienen. Die Maschenweite der Siebe 10 ist an die Körnung des Filtermaterials 7 angepasst und liegt vorzugsweise im Bereich von 0,1 mm bis 0,4 mm. Die Siebe 10 können statt Maschen auch Löcher mit Öffnungen im Bereich von 0,1 mm bis 0,4 mm aufweisen. Die Siebe 10 können eingepresst oder angeformt sein. Sinngemäß das Gleiche gilt für das Sieb 9.

Darüber hinaus können im Inneren der erfindungsgemäßen Wasserfilterkartusche 1 eine oder mehrere Stege 11.1, 11.2 und 11.3 vorgesehen sein. Bei der in Figur 2 gezeigten Ausführungsform sind die Stege 11.1, 11.2 und 11.3 an den oberen Gehäuseteil 2 angeformt. Mit Hilfe der Stege 11.1, 11.2 und 11.3 wird das zentrale Fallrohr 8, das im Folgenden auch als Fallleitung bezeichnet wird, in seiner Position gehalten und für eine gleichmäßige Verteilung des Filtermaterials 7 gesorgt.

Die Aufbereitung des Wassers erfolgt mit Hilfe des granulatförmigen oder körnigen Filtermaterials 7. Als Filtermaterial 7 kann bei der erfindungsgemäßen Wasserfilterkartusche 1 ein Gemisch aus Ionenaustauschern und Aktivkohle dienen.

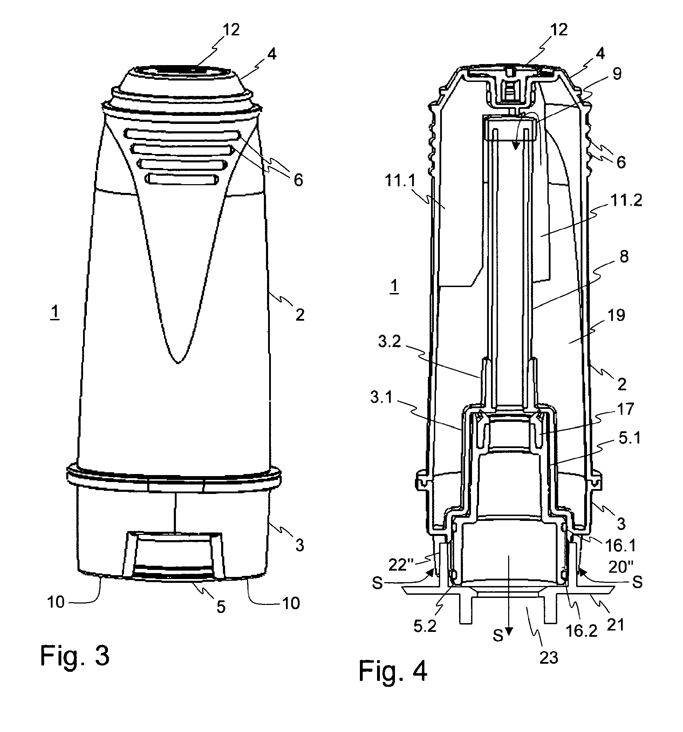

In Figur 3 ist eine dreidimensionale Ansicht und in Figur 4 ein Schnitt durch die erfindungsgemäße Wasserfilterkartusche 1 gezeigt, wobei die Wasserfilterkartusche 1 nun für einen Wassertank 20" mit einem zweiten Anschlusstyp 22" vorbereitet ist. Der Aufbau der Filterkartusche 1 unterscheidet sich nicht von der in den Figuren 1 und 2 gezeigten Ausführungsform. Der Übersichtlichkeit halber ist in Figur 4 die Befüllung der Kartusche 1 mit Filtermaterial 7 nicht gezeigt. Der Wassertank 20" unterscheidet sich vom Wassertank 20' durch einen gegenüber dem Anschluss 22' anders geformten Anschluss 22". Der Anschluss 22" weist einen größeren Durchmesser auf als der Anschluss 22'. Um die Filterkartusche 1 mit dem Anschluss 22" zu verbinden, wird der zweite Anschlussstutzen 5.2 des Adapters 5 verwendet. Dazu wird der Adapter 5 so in die Adapteraufnahme 3.1 der Kartusche 1 gesteckt, dass der Anschlussstutzen 5.2 auf der Unterseite der Kartusche 1 herausragt. Der Anschlussstutzen 5.2 des Adapters 5 ragt in den Anschluss 22" und bildet mit ihm eine formschlüssige und kraftschlüssige Verbindung. Der Anschlussstutzen 5.2 weist auf seiner Außenseite eine erste Dichtung 16.1 und eine zweite Dichtung 16.2 auf. Mit Hilfe der Dichtung 16.2 wird der Übergang zwischen dem Anschlussstutzen 5.2 und dem Anschluss 22" abgedichtet und sichergestellt, dass das aufbereitete Wasser nicht mehr zurück in den Wassertank 20" gelangt. Mit Hilfe der Dichtung 16.1 und den beiden ringförmigen Rippen 5.3 und 5.4 wird erreicht, dass der Adapter 5 sicher in der Aufnahme 3.1 sitzt und die Kartusche 1 nicht versehendlich abrutscht. In der in Figur 4 gezeigten Einbaulage wird die ringförmige Lippe der Dichtung 17 gegen die Adapteraufnahme 3.1 gedrückt. Mit Hilfe der Dichtung 16.2 und der Dichtung 17 wird verhindert, dass das aufbereitete Wasser zurück in den Wassertank 20" gelangt.

Um die Filterkartusche 1 in Betrieb zu nehmen, wird zunächst ermittelt, welcher der beiden Anschlussstutzen 5.1 oder 5.2 des Adapters 5 auf den Anschluss 22'/22" des Wassertanks 20'/20" passt und der Adapter 5 dann so in die Adapteraufnahme 3.1 des Gehäuses 2, 3 der Filterkartusche 1 gesteckt, dass der passende Anschlussstutzen 5.1 beziehungsweise 5.2 aus dem unteren Gehäuseteil 3 herausragt. In einem zweiten Schritt wird die Filterkartusche 1 auf den Anschluss 22' oder 22" des Wassertanks 20' beziehungsweise des Wassertanks 20" gesteckt. Danach ist die Filterkartusche 1 im Wassertank der Getränkemaschine montiert und betriebsbereit.

Im Betrieb saugt die Saugpumpe der Getränkemaschine Wasser aus der Filterkartusche 1. Dabei strömt das zu filternde Wasser aus dem Wassertank 20' beziehungsweise 20" durch die im Bodenbereich der Filterkartusche 1 angeordneten Siebe 10 nach oben durch das Filtermaterial 7 und wird während dessen aufbereitet. Anschließend strömt das aufbereitete Wasser durch das Sieb 9 und gelangt über das Fallrohr 8 zum Auslass 23.

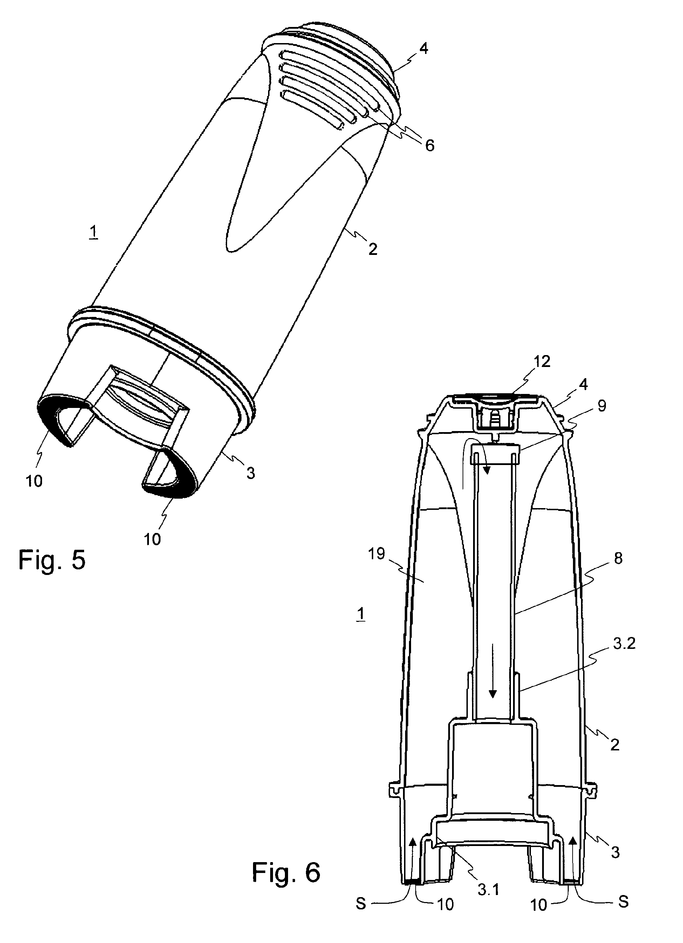

Figur 5 zeigt eine dreidimensionale Ansicht der erfindungsgemäßen Filterkartusche 1 ohne den Adapter 5.

Figur 6 zeigt einen Schnitt durch die erfindungsgemäße Filterkartusche 1 ohne den Adapter 5 und ohne das Filtermaterial 7.

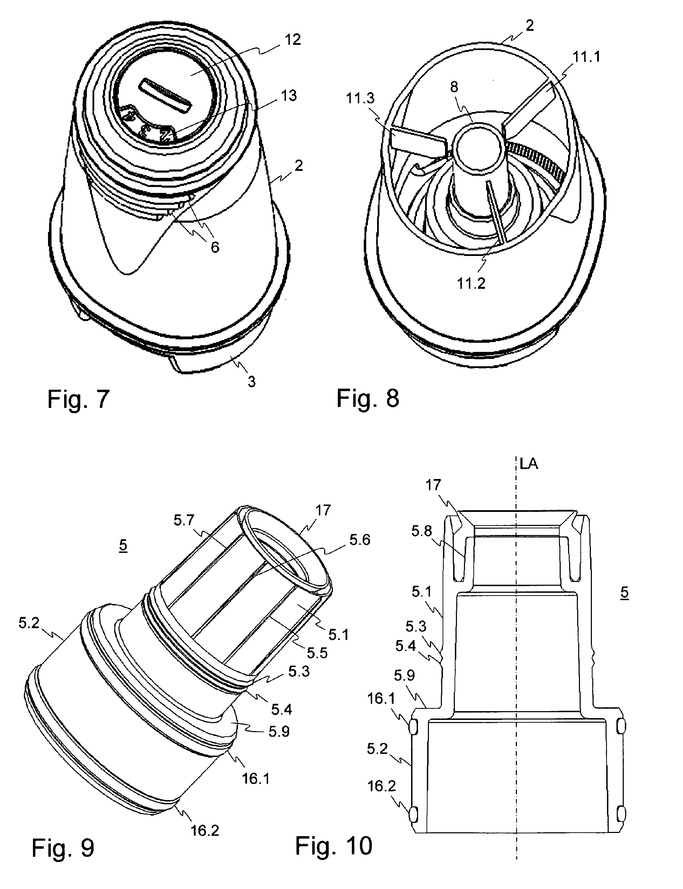

Wie aus Figur 7 zu entnehmen ist, befinden sich auf dem Deckel 4 Zahlen von 1 bis 12, die als Monatsangaben dienen. Zudem ist auf dem Deckel 4 eine drehbare Scheibe 12 mit einem Sichtfenster 13 angeordnet, wobei die im Sichtfenster 13 angezeigte Zahl angibt, wann die Filterkartusche verbraucht ist und durch eine neue Kartusche ersetzt werden sollte. Bei der in Figur 7 dargestellten Ausführungsform ist die Drehscheibe 12 so eingestellt, dass im Sichtfenster 13 die Zahlen 2, 3 und 4 zu erkennen sind.

Figur 8 zeigt eine dreidimensionale Ansicht der erfindungsgemäßen Wasserfilterkartusche 1 ohne den Deckel 4.

Figur 9 zeigt eine dreidimensionale Ansicht des Adapters 5 der erfindungsgemäßen Filterkartusche 1.

Figur 10 zeigt den Adapter 5 im Querschnitt. Der Übergang vom ersten Anschlussstutzen 5.1 zum zweiten Anschlussstutzen 5.2 wird durch den Absatz 5.9 gebildet.

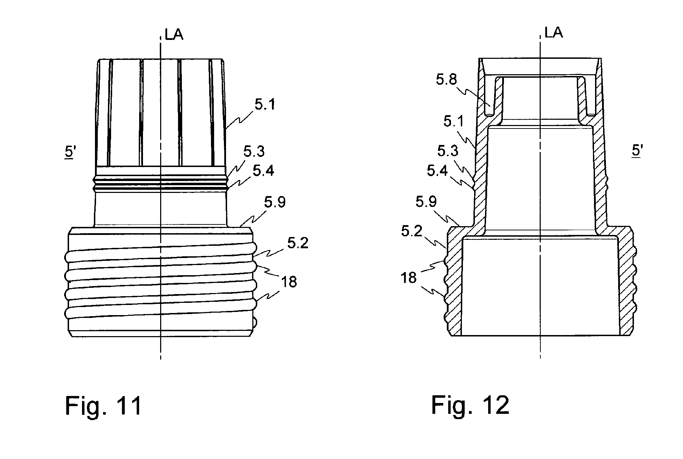

Falls der Anschluss 22 des Wassertanks 20 ein Innengewinde aufweist, kann ein Adapter 5' verwendet werden, der wie in den Figuren 11 und 12 gezeigt, ausgebildet ist. In Figur 11 ist der Adapter 5' in der Seitenansicht und in Figur 12 im Querschnitt dargestellt. Der Adapter 5' unterscheidet sich vom in den Figuren 9 und 10 dargestellten Adapter 5 dadurch, dass der Adapter 5' auf der Außenseite des zweiten Anschlussstücks 5.2 anstatt der beiden Dichtringe 16.1 und 16.2 ein Gewinde 18 aufweist. Das Gewinde kann, falls erforderlich, auch auf der Außenseite des ersten Anschlussstücks 5.1 angeordnet sein.

Für den Fall, dass der Anschluss 22 des Wassertanks 20 ein Außengewinde aufweist, kann der Adapter 5' auf der Innenseite des zweiten Anschlussstücks 5.2 ein entsprechend geformtes Gewinde aufweisen. Das Gewinde kann, falls erforderlich, auch auf der Innenseite des ersten Anschlussstücks 5.1 angeordnet sein.

Statt dessen kann der Adapter 5 auch mit einem Bajonettverschluss oder einer Schnappverbindung ausgestattet sein. Der Adapter kann auch auf dem einen Anschlussstück ein Gewinde und auf dem anderen Anschlussstück einen Bajonettverschluss aufweisen. Der Adapter kann eine Kombination der verschiedenen Anschlussarten aufweisen.

Der Adapter 5 kann so ausgebildet sein, dass sobald der Adapter mit dem Gehäuse 3 der Filterkartusche 1 verbunden ist, nicht mehr vom Gehäuse 3 trennbar ist. Dies kann beispielsweise mittels einer nicht mehr lösbaren Schnappverbindung erfolgen. Auf diese Weise kann die Filterkartusche mit einem werksseitig richtig montierten Adapter ausgeliefert werden. Der Endverbraucher braucht dann nicht mehr zu prüfen welche Seite des Adapters zum Anschluss des Wassertanks passt.

Der Querschnitt des Adapters richtet sich nach den baulichen Gegebenheiten Anschlusses des Wassertanks. Weist der Wassertank 20 beispielsweise einen Anschluss 22 mit rechteckigem Querschnitt auf, so kann eines der beiden Anschlussstücke des Adapters ebenfalls einen entsprechenden rechteckigen Querschnitt aufweisen.

Die Filterkartusche 1 kann beispielsweise im privaten Haushalt in Haushaltsgeräten und Haushaltsmaschinen, wie Kaffee-, Tee-, Süßgetränkemaschinen, Entsaftern, Bügeleisen, Spülmaschinen, Waschmaschinen, Wasserreinigungsgeräten und Wasserspendern, in Luftbefeuchtern und Luftreinigern verwendet werden. Die Wasserfilterkartusche kann aber auch in Maschinen im Gastronomiebereich verwendet werden.

Im Folgenden wird eine weitere Ausführungsform der erfindungsgemäßen Filterkartusche beschrieben. Die Adapteraufnahme 3.1 der Filterkartusche 1 kann so ausgebildet sein, dass sie selbst als Kupplung zum Anschluss 22" des Wassertanks 20" dient. In diesem Fall kann der Adapter 5 weggelassen werden. Soll die Filterkartusche 1 hingegen auf den Anschluss 22' des Wassertanks 20' gesteckt werden, kann in die Adapteraufnahme 3.1 ein Adapter gesteckt werden, der dann die passende Kupplung zum Anschluss 22' bildet.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 1: Wasserfilterkartusche
- 2: oberes Gehäuseteil
- 3: unteres Gehäuseteil
- 3.1: Aufnahme für den Adapter
- 3.2: Aufnahme für das Fallrohr
- 4: Deckel
- 5: Adapter
- 5.1: erstes Anschlussstück
- 5.2: zweites Anschlussstück
- 5.3: erste ringförmige Rippe
- 5.4: zweite ringförmige Rippe
- 5.5 - 5.7: Längsrippen
- 5.8: innere Wand
- 5.9: Absatz
- 6: Rippen
- 7: Filtermaterial
- 8: Fallrohr
- 9: Sieb
- 10: Sieb
- 11.1 - 11.3: Stege
- 12: Drehscheibe
- 13: Sichtfenster
- 16.1: Dichtring
- 16.2: Dichtring
- 17: Dichtung
- 18: Gewinde
- 19: Abschnitt oder Kammer
- 20': Wassertank
- 20": Wassertank
- 21: Boden
- 22': Anschluss
- 22": Anschluss
- 23: Auslass
- S: Strömungsrichtung
- LA: Längsachse

## Patentansprüche

1. Wasserfilterkartusche für einen Wassertank,
- mit einem Gehäuse (2, 3), das eine Adapteraufnahme (3.1) aufweist,
- mit einem Adapter (5) für einen Anschlussstutzen (22'; 22") des Wassertanks (20'; 20"),
- wobei der Adapter (5) in die Adapteraufnahme (3.1) des Gehäuses (2, 3) einbaubar ist.

2. Wasserfilterkartusche nach Patentanspruch 1,
wobei der Adapter (5) zwei unterschiedlich ausgebildete Anschlussstutzen (5.1, 5.2) aufweist.

3. Wasserfilterkartusche nach Patentanspruch 1 oder 2,
- wobei der Adapter (5) in zwei verschiedenen Einbaulagen in die Adapteraufnahme (3.1) des Gehäuses (2, 3) einbaubar ist,
- wobei über den Adapter (5) in seiner ersten Einbaulage das Gehäuse (2, 3) mit einem Anschluss (22') des Wassertanks (22') verbindbar ist, der eine erste Bauform aufweist und
- wobei über den Adapter (5) in seiner zweiten Einbaulage das Gehäuse (2, 3) mit einem Anschluss (22") des Wassertanks (22") verbindbar ist, der eine zweite Bauform aufweist.

4. Wasserfilterkartusche nach Patentanspruch 1, 2 oder 3,
wobei die Adapteraufnahme (3.1) im Inneren des Gehäuses (2, 3) angeordnet ist.

5. Wasserfilterkartusche nach einem der Patentansprüche 1 bis 4,
wobei der Adapter (5) herausnehmbar ist.

6. Wasserfilterkartusche nach einem der Patentansprüche 1 bis 5,
wobei der erste Anschlussstutzen (5.1) des Adapters (5) in Längsrichtung (LA) mehrere Rippen (5.5, 5.6, 5.7) aufweist.

7. Wasserfilterkartusche nach einem der Patentansprüche 1 bis 6,
wobei der erste Anschlussstutzen (5.1) des Adapters (5) eine ringförmige Rippe (5.3; 5.4) aufweist.

8. Wasserfilterkartusche nach einem der Patentansprüche 1 bis 7,
wobei der erste Anschlussstutzen (5.1) des Adapters (5) im Mündungsbereich eine Dichtung (17) aufweist.

9. Wasserfilterkartusche nach einem der Patentansprüche 1 bis 8,
wobei der zweite Anschlussstutzen (5.2) des Adapters (5) auf der Außenseite einen elastischen Ring (16.1) aufweist.

10. Wasserfilterkartusche nach einem der Patentansprüche 1 bis 9,
wobei der zweite Anschlussstutzen (5.2) des Adapters (5) auf der Außenseite einen Dichtring (16.2) aufweist.

11. Wasserfilterkartusche nach einem der Patentansprüche 1 bis 10,
bei der der Adapter (5') ein Gewinde (18) aufweist.

12. Wasserfilterkartusche nach einem der Patentansprüche 1 bis 11,
bei der der Adapter (5, 5') mit dem Gehäuse (3) verbindbar ist, wobei die Verbindung nicht mehr trennbar ist.

13. Wasserfilterkartusche nach einem der Patentansprüche 1 bis 12,
bei der im Bodenbereich des Gehäuses (3) ein Sieb (10) vorgesehen ist.

14. Wasserfilterkartusche nach einem der Patentansprüche 1 bis 13,
- mit einem Abschnitt (19) in dem das Wasser aufsteigt und
- mit einer sich daran anschließenden Fallleitung (8) .

15. Wasserfilterkartusche nach Patentanspruch 14,
bei der in dem Abschnitt (19) Filtermaterial (7) vorgesehen ist.

16. Wasserfilterkartusche nach Patentanspruch 14 oder 15, bei der zwischen dem Abschnitt (19) und der Fallleitung (8) ein Sieb (9) angeordnet ist.

17. Wasserfilterkartusche nach einem der Patentansprüche 14 bis 16,
bei der im Gehäuse (2) radial verlaufende Stege (11.1, 11.2, 11.3) vorgesehen sind, die die Fallleitung (8) umgeben.

18. Wasserfilterkartusche nach einem der Patentansprüche 1 bis 17,
bei der das Gehäuse (2, 3) einen unteren Gehäuseteil (3) und einen oberen Gehäuseteil (2) aufweist,
wobei die Adapteraufnahme (3.1) Teil des unteren Gehäuseteils (3) ist.

19. Getränkemaschine mit einer Wasserfilterkartusche nach einem der Patentansprüche 1 bis 18,
bei der eine Saugpumpe vorgesehen ist.

20. Verwendung der Wasserfilterkartusche nach einem der Patentansprüche 1 bis 19 in einer Getränkemaschine.
